(19) 

Europäisches
Patentamt

European
Patent Office

Office européen
des brevets

(11) **EP 4 779 834 A1**

(12) **EUROPEAN PATENT APPLICATION**
published in accordance with Art. 153(4) EPC

(43) Date of publication:
**22.07.2026 Bulletin 2026/30**

(21) Application number: **23951976.2**

(22) Date of filing: **18.10.2023**

(51) International Patent Classification (IPC):
*H02J 3/38* (2026.01)

(52) Cooperative Patent Classification (CPC):
Y02E 10/56

(86) International application number:
**PCT/CN2023/125103**

(87) International publication number:
**WO 2025/055050 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2023 CN 202311189448**

(71) Applicant: **Sungrow Power Supply Co., Ltd.
Hefei, Anhui 230088 (CN)**

(72) Inventors:
• **ZHU, Ke**
  **Hefei, Anhui 230088 (CN)**
• **BIE, Wei**
  **Hefei, Anhui 230088 (CN)**

• **CAO, Jinhu**
  **Hefei, Anhui 230088 (CN)**
• **PAN, Nianan**
  **Hefei, Anhui 230088 (CN)**
• **ZHANG, Bing**
  **Hefei, Anhui 230088 (CN)**
• **YE, Guoliang**
  **Hefei, Anhui 230088 (CN)**
• **WANG, Pan**
  **Hefei, Anhui 230088 (CN)**
• **PENG, Lianglin**
  **Hefei, Anhui 230088 (CN)**

(74) Representative: **Epping - Hermann - Fischer
Patentanwaltsgesellschaft mbH
Schloßschmidstraße 5
80639 München (DE)**

(54) **PHOTOVOLTAIC GRID-TIED POWER GENERATION SYSTEM AND GRID-TIED CONTROL METHOD FOR INVERTER**

(57)  A photovoltaic grid-tied power generation system and a grid-tied control method for an inverter. The method comprises: determining whether voltages to ground of positive and negative electrodes of an inverter at a photovoltaic connection side satisfy a preset balance condition (S101); if the voltages to ground of the positive and negative electrodes at the photovoltaic connection side does not satisfy the preset balance condition, determining the electrode of which the voltage to ground has a greater absolute value (S102); then controlling the equivalent impedance to ground of the corresponding electrode of a direct-current bus in the inverter to decrease (S103), thus causing the midpoint voltage of the direct-current bus to approach zero, and reducing the voltage difference between two ends of a contact of an alternating-current grid-tied relay while implementing grid-tied connection of the inverter; and then performing grid-tied control (S104), i.e., reducing a surge current when the alternating-current grid-tied relay is pulled in, and reducing the probability of ablation of the contact of the relay.

FIG. 9

**Description**

This application claims the priority to Chinese Patent Application No. 202311189448.8, titled "PHOTOVOLTAIC GRID-TIED POWER GENERATION SYSTEM AND GRID-TIED CONTROL METHOD FOR INVERTER", filed on September 14, 2023 with the China National Intellectual Property Administration, which is incorporated herein by reference in its entirety.

**FIELD**

The present disclosure relates to the technical field of grid-connected photovoltaic power generation, and in particular to a grid-connected photovoltaic power generation system and a grid-connection control method for an inverter.

**BACKGROUND**

In grid-connected photovoltaic power generation systems, inverters typically receive direct current (DC) power transmitted by multiple photovoltaic strings to which the inverters are connected via their DC sides, aggregate and invert the DC power, and feed alternating current (AC) power obtained by inversion into the power grid through AC grid-connection relays. In practical applications, following safety standard requirements, two AC grid-connection relays connected in series are often utilized and are closed sequentially to implement grid connection of the inverters.

With increase of photovoltaic application scenarios, variations in construction quality, and aging of products, insulation damage may occur in the DC cables between the photovoltaic strings and the inverters. In a case that a negative terminal or a positive terminal of a photovoltaic string experiences a reduced resistance to ground due to weather or insulation failure, a voltage to ground at a DC side of the inverter changes, generating a voltage difference across the AC grid-connection relay. When the AC grid-connection relay is switched on, the voltage difference leads to a significant inrush current, and the inrush current causes erosion of a contact of the relay.

Therefore, there is an urgent need for a solution to protect AC grid-connection relays during grid connection of the inverters.

**SUMMARY**

A grid-connected photovoltaic power generation system and a grid-connection control method for an inverter are provided according to the present disclosure, to reduce voltage differences across contacts of AC grid-connection relays during implementing grid connection of inverters in conventional technologies, thereby reducing the probability of erosion on the contacts of the relays.

To achieve the above objectives, the present application provides the following technical solutions.

A grid-connection control method for an inverter is provided according to a first aspect of the present disclosure. The inverter is connected to a grid connection point via a grid-connection relay branch, and the grid-connection control method includes:

determining whether a voltage to ground of a positive terminal and a voltage to ground of a negative terminal at a photovoltaic side of the inverter meet a predetermined balance condition;

determining, in response to the voltage to ground of the positive terminal and the voltage to ground of the negative terminal at the photovoltaic side failing to meet the predetermined balance condition, which terminal of the positive and the negative terminals has a greater absolute voltage to ground;

reducing an equivalent impedance to ground of a corresponding terminal, having a same polarity as the determined terminal, of a DC bus in the inverter; and

performing grid-connection control.

In an embodiment, the reducing an equivalent impedance to ground of a respective terminal of a DC bus in the inverter includes:
connecting a grounding resistor to the respective terminal of the DC bus.

In an embodiment, the determining, in response to the voltage to ground of the positive terminal and the voltage to ground of the negative terminal at the photovoltaic side failing to meet the predetermined balance condition, an terminal with a greater absolute value of the voltage to ground from the positive terminal and the negative terminal includes:

comparing an absolute value of the voltage to ground of either of the positive terminal and the negative terminal at the photovoltaic side of the inverter with a half of a bus voltage of the DC bus; and

determining, in response to the absolute value of the voltage to ground of the terminal at the photovoltaic side of the inverter is greater than the half of the bus voltage, the terminal as the terminal with the greater absolute voltage to ground; and

determining, otherwise, the other terminal as the terminal with the greater absolute voltage to ground.

In an embodiment, the comparing an absolute value of the voltage to ground of either of the terminals at the photovoltaic side of the inverter with a half of a bus voltage of the DC bus includes:

comparing the absolute value of the voltage to ground of the negative terminal at the photovoltaic side of the inverter with the half of the bus voltage; or

comparing the absolute value of the voltage to ground of the positive terminal at the photovoltaic side of the inverter with the half of the bus voltage.

In an embodiment, the determining whether a voltage to ground of a positive terminal and a voltage to ground of a negative terminal at a photovoltaic side of the inverter meet a predetermined balance condition includes:

determining whether a deviation between an absolute value of the voltage to ground of either of the terminals at the photovoltaic side of the inverter and a half of a bus voltage of the DC bus is greater than a predetermined deviation;

determining, in response to the deviation being greater than the predetermined deviation, that the voltage to ground of the positive terminal and the voltage to ground of the negative terminal at the photovoltaic side fail to meet the predetermined balance condition; and otherwise determining that the voltage to ground of the positive terminal and the voltage to ground of the negative terminal at the photovoltaic side meet the predetermined balance condition.

In an embodiment, the determining whether a deviation between an absolute value of the voltage to ground of either of the terminals at the photovoltaic side of the inverter and a half of a bus voltage of the DC bus is greater than a predetermined deviation includes:

determining whether a deviation between an absolute value of the voltage to ground of the negative terminal at the photovoltaic side of the inverter and the half of the bus voltage is greater than the predetermined deviation; or

determining whether a deviation between an absolute value of the voltage to ground of the positive terminal at the photovoltaic side of the inverter and the half of the bus voltage is greater than the predetermined deviation.

In an embodiment, the determining whether a voltage to ground of a positive terminal and a voltage to ground of a negative terminal at a photovoltaic side of the inverter meet a predetermined balance condition includes:

determining whether a common-mode voltage difference across the grid-connection relay branch via which the inverter is connected to the grid connection point is greater than a predetermined voltage difference;

determining, in response to the common-mode voltage difference being greater than the predetermined voltage difference, that the voltage to ground of the positive terminal and the voltage to ground of the negative terminal at the photovoltaic side fail to meet the predetermined balance condition; and otherwise determining that the voltage to ground of the positive terminal and the voltage to ground of the negative terminal at the photovoltaic side meet the predetermined balance condition.

In an embodiment, the determining whether a voltage to ground of a positive terminal and a voltage to ground of a negative terminal at a photovoltaic side of the inverter meet a predetermined balance condition includes:

determining whether a difference between an absolute value of the voltage to ground of the positive terminal at the photovoltaic side of the inverter and an absolute value of the voltage to ground of the negative terminal at the photovoltaic side is greater than a predetermined difference;

determining, in response to the difference being greater than the predetermined difference, that the voltage to ground of the positive terminal and the voltage to ground of the negative terminal at the photovoltaic side fail to meet the predetermined balance condition; and otherwise determining that the voltage to ground of the positive terminal and the voltage to ground of the negative terminal at the photovoltaic side meet the predetermined balance condition.

In an embodiment, after the determining whether a voltage to ground of a positive terminal and a voltage to ground of a negative terminal at a photovoltaic side of the inverter meet a predetermined balance condition, in response to the voltage to ground of the positive terminal and the voltage to ground of the negative terminal at the photovoltaic side failing to meet the predetermined balance condition, the grid-connection control method further includes:

recording a determination parameter for determining whether the voltage to ground of the positive terminal and the voltage to ground of the negative terminal at the photovoltaic side meet the predetermined balance condition; and

where after the reducing an equivalent impedance to ground of a corresponding terminal of a DC bus in the inverter, the grid-connection control method further includes:

determining whether the determination parameter is changing toward satisfying the predetermined balance condition;

performing, in response to the evaluation parameter changing toward satisfying the preset balance condition, the grid-connection control; and otherwise performing the grid-connection control after restoring the equivalent impedance to ground of the corresponding terminal of the DC bus.

In an embodiment, after the determining whether a voltage to ground of a positive terminal and a voltage to ground of a negative terminal at a photovoltaic side of the inverter meet a predetermined balance condition, the grid-connection control method further includes:
in response to the voltage to ground of the positive terminal and the voltage to ground of the negative terminal at the photovoltaic side meeting the predetermined balance condition, performing the grid-connection control.

A grid-connected photovoltaic power generation system is provided according to a second aspect of the present disclosure. The grid-connected photovoltaic power generation system includes at least one inverter and a grid-connection relay branch for the inverter, where

a photovoltaic side of the inverter is connected to at least one photovoltaic string;

the inverter is connected to a grid connection point via the grid-connection relay branch;

a positive terminal and a negative terminal of a DC bus in the inverter are each grounded via a set of a switch and a resistor connected in series;

a controller in the inverter performs grid-connection control by using the grid-connection control method for the inverter according to any one of the above first aspect; and

the switches are controlled by the controller.

In an embodiment, resistances of the resistors are configured to satisfy a condition that a difference between equivalent impedances to ground of the two terminals of the DC bus, when the resistors are in a connected state, is less than a predetermined threshold.
In an embodiment, in a case that the number of the inverter is greater than one, controllers are each configured to determine, when performing the grid-connection control method, whether a voltage to ground of the positive terminal and a voltage to ground of the negative terminal at the photovoltaic side of the inverter meet the predetermined balance condition by determining whether a common-mode voltage difference across the respective grid-connection relay branch is greater than a predetermined threshold.
In an embodiment, the switches and the resistors are potential-induced degradation PID power supply components within the inverter.
In an embodiment, the grid-connection relay branch includes: at least two AC relays connected in series.
In an embodiment, a main circuit of the inverter includes an inverter unit;

a DC side of the inverter unit is connected to the photovoltaic side of the inverter via the DC bus;

a bus capacitor is connected between the positive terminal and the negative terminal of the DC bus; and

an AC side of the inverter unit is connected to an AC side of the inverter.

In an embodiment, the main circuit of the inverter further includes: at least one boost unit;

one end of the boost unit serves as an end corresponding to the photovoltaic side of the inverter and is configured to connect a respective photovoltaic string; and

the other end of the boost unit is connected to the DC side of the inverter unit via the DC bus.

In the grid-connection control method for the inverter according to the present disclosure, after determining whether a voltage to ground of a positive terminal and a voltage to ground of a negative terminal at a photovoltaic side of the inverter meet a predetermined balance condition, in response to the voltage to ground of the positive terminal and the voltage to ground of the negative terminal at the photovoltaic side failing to meet the predetermined balance condition, it is determined which terminal of the positive terminal and the negative terminal has a greater absolute voltage to ground. Then, an equivalent impedance to ground (insulation resistance to ground) of a corresponding terminal of the DC bus in the inverter, which has a same polarity as the determined terminal, is reduced to cause a midpoint voltage of the DC bus to approach zero, thereby reducing a voltage difference across a contact of an AC grid-connection relay during implementing grid connection of the inverter. Subsequently, grid-connection control is performed to reduce the inrush current when closing the AC grid-connection relay, thereby reducing the probability of the erosion on the contact of the relay.

## BRIEF DESCRIPTION OF THE DRAWINGS

To more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative work.

FIG. 1 is a schematic structural diagram of a grid-connected photovoltaic power generation system according to the conventional technology;

FIG. 2 is a schematic diagram of one phase of a grid-connection relay branch for an inverter according to the conventional technology;

FIG. 3 is a flowchart of a grid-connection control method for an inverter according to an embodiment of the present disclosure;

FIG. 4 is an equivalent structural diagram of a grid-connected photovoltaic power generation system according to an embodiment of the present disclosure;

FIG. 5 is an equivalent structural diagram of a grid-connected photovoltaic power generation system according to another embodiment of the present disclosure;

FIG. 6 a flowchart of a grid-connection control method for an inverter according to another embodiment of the present disclosure;

FIG. 7 is a schematic diagram showing a complete process of a grid-connection control method for an inverter according to an embodiment of the present disclosure;

FIG. 8 is a schematic diagram showing a complete process of a grid-connection control method for an inverter according to another embodiment of the present disclosure; and

FIG. 9 is a schematic structural diagram of a grid-connected photovoltaic power generation system according to an embodiment of the present disclosure.

## DETAILED DESCRIPTION

The technical solutions according to the embodiments of the present disclosure are described clearly and completely as follows in conjunction with the drawings in the embodiments of the present disclosure. It is apparent that the described embodiments are only some of the embodiments according to the present disclosure, rather than all the embodiments. Any other embodiments obtained by those skilled in the art based on the embodiments of the present disclosure, without any creative effort, shall fall within the protection scope of the present disclosure.

The terms "include", "comprise" or any other variations herein are intended to cover non-exclusive "include", thus a process, a method, an object or a device including a series of factors not only include the listed factors, but also include other factors not explicitly listed, or also include inherent factors of the process, the method, the object or the device. Unless expressly limited otherwise, the phrase "comprising (including) a/an..." does not exclude existence of other similar elements in the process, method, article or device including the elements.

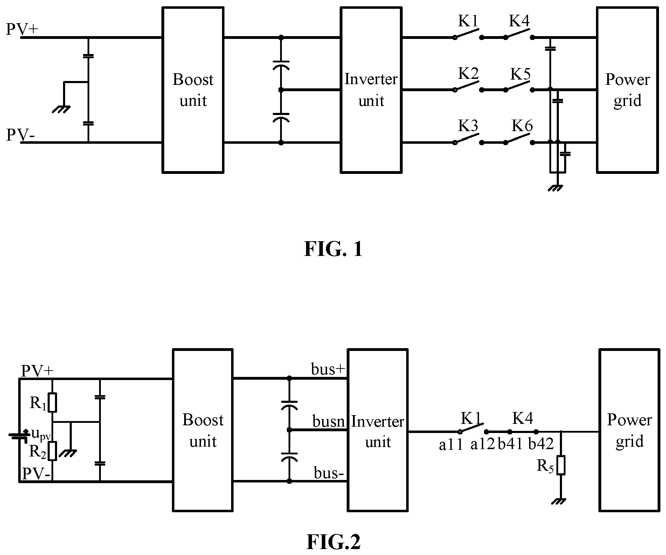

An inverter generally includes an inverter unit and at least one boost unit (taking one boost unit as an example for illustration in FIG. 1). Due to safety standard requirements, referring to FIG. 1, in the conventional technology, two alternating current (AC) grid-connection relays are connected in series at an AC side of the inverter, and the two AC grid-connection relays are closed sequentially to implement a grid connection of the inverter. In a three-phase grid-connected inverter system, the two AC grid-connection relays are both three-phase relays, where one AC grid-connection relay includes relays K1 to K3 respectively arranged in three phase lines, and the other AC grid-connection relay includes relays K4 to K6 respectively arranged in three phase lines. When an impedance to ground of a photovoltaic string PV connected to a photovoltaic side of the inverter is abnormal, the AC grid-connection relay which is closed later during the grid connection of the inverter is subjected to a significant common-mode voltage difference across a main contact of the AC grid-connection relay, and a significant inrush current is generated at a time instant of closing.

In FIG. 2, one phase at an AC side of an inverter is taken as an example for illustration. K1 and K4 represent relays for the phase in the two AC grid-connection relays, a11 and a12 represent two ends of a main contact of the relay K1, b41 and b42 represent two ends of a main contact of the relay K4, $R_5$ represents an impedance to ground for the phase at the AC side of the inverter, $R_1$ represents an impedance to ground of a positive terminal PV+ of a photovoltaic string, and $R_2$ represents an impedance to ground of a negative terminal PV-of the photovoltaic string. A common-mode voltage to ground $u_{busn}$ of a midpoint busn in a DC bus at a DC side of the inverter unit may then be calculated by using the following formula:

$$u_{busn} = u_{pv} \times \frac{R_2}{R_1 + R_2} - 0.5u_{bus}$$

where $u_{pv}$ represents a voltage of the photovoltaic string PV, that is, a voltage difference between the positive terminal PV+ of the photovoltaic string and the negative terminal PV- of the photovoltaic string; $u_{bus}$ represents a bus voltage, that is, a voltage difference between a positive terminal bus+ of the DC bus and a negative terminal bus- of the DC bus.

When the inverter is started, after the relay K4 is closed and before the relay K1 is closed, a common-mode voltage to ground $u_a$ at the point a11 is approximately equal to the sum of a voltage $u_{busn}$ at the midpoint of the bus and an inverter voltage $u_{ac\text{-}inverter}$ of the inverter unit. Before the grid connection, the inverter voltage $u_{ac\text{-}inverter}$ is approximately equal to a predetermined grid voltage $u_{ac\text{-}grid}$ at a side of the relay K4 away from the inverter, that is:

$$u_a = u_{busn} + u_{ac-inverter} = u_{pv} \times \frac{R_2}{R_1 + R_2} - 0.5u_{bus} + u_{ac-inverter}$$

$$u_{ac-grid} \approx u_{ac-inverter}$$

Therefore, a common-mode voltage difference ΔV across two ends a11 and a12 of the main contact of the relay K1 is represented as:

$$\Delta V = u_a - u_{ac-grid} = u_{pv} \times \frac{R_1}{R_1 + R_2} - 0.5u_{bus} + u_{ac-inverter} - u_{ac-grid}$$

$$\approx u_{pv} \times \frac{R_2}{R_1 + R_2} - 0.5u_{bus}$$

Since the inverter features $u_{pv} \approx u_{bus}$ before the grid connection, when an impedance to ground of the photovoltaic string PV is normal (that is, R1=R2), $\Delta V \approx 0$. When an impedance to ground of the positive terminal PV+ or an impedance to ground of the negative terminal PV- of the photovoltaic string PV is abnormal due to the PV being grounded (that is, R1 « R2 or R2 « R1), $\Delta V \approx \pm 0.5u_{bus}$. In this case, a significant voltage difference is generated across the main contact of the relay K1, and in turn an inrush current causes erosion to the main contact when closing the relay K1.

Therefore, a grid-connection control method for an inverter is provided according to an embodiment of the present disclosure, to reduce a voltage difference across a contact of an AC grid-connection relay during grid connection of the inverter in the conventional technology, thereby reducing the probability of erosion on the contact of the relay.

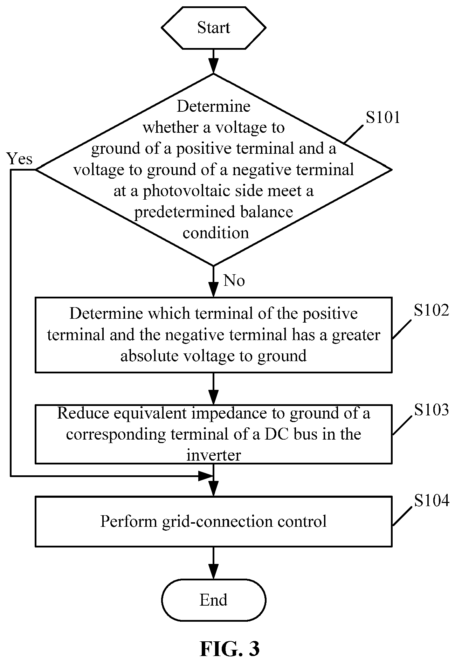

Referring to FIG. 3, the grid-connection control method for the inverter includes S101 to S104.

In S101, it is determined whether a voltage to ground of a positive terminal and a voltage to ground of a negative terminal at a photovoltaic side of the inverter meet a predetermined balance condition.

The photovoltaic side refers to a side of the inverter connected to a photovoltaic string, such as an input terminal of a boost unit shown in FIG. 1.

The predetermined balance condition mainly characterizes the balance between the voltage to ground of the positive terminal (that is, PV+ as shown in FIG. 1) and the voltage to ground of the negative terminal (that is, PV- as shown in FIG. 2) at the photovoltaic side. When an impedance to ground of the positive terminal PV+ or an impedance to ground of the negative terminal PV- of the photovoltaic string PV is abnormal due to the PV being grounded, the voltage to ground of the positive terminal and the voltage to ground of the negative terminal at the photovoltaic side fail to meet the predetermined balance condition.

It should be noted that in FIG. 1 and FIG. 2, only one pair of positive terminal and negative terminal being provided at the photovoltaic side is taken as an example for illustration. In practical applications, when the inverter includes multiple boost units, input terminals of each of the boost units function as a pair of positive terminal and negative terminal at the photovoltaic side. Grounding of any of the positive terminals and negative terminals causes an abnormal impedance to ground at the photovoltaic side, thereby failing to meet the predetermined balance condition.

In response to the voltage to ground of the positive terminal and the voltage to ground of the negative terminal at the photovoltaic side failing to meet the predetermined balance condition, the method proceeds to S102.

In S102, which terminal of the positive and the negative terminals has a greater absolute voltage to ground is determined.

Since the inverter features $u_{pv} \approx u_{bus}$ before the grid connection, when the impedance to ground of the photovoltaic string PV as shown in FIG. 1 or FIG. 2 is normal, that is, R1=R2, |the voltage to ground of PV+| = |the voltage to ground of PV-| $\approx 0.5u_{bus}$. However, when the impedance to ground of the photovoltaic string PV is abnormal, for example, when the positive terminal PV+ of the photovoltaic string is grounded and R1 « R2, |the voltage to ground of PV+| = 0 < $0.5u_{bus}$, and |the voltage to ground of PV-| $\approx u_{bus} > 0.5u_{bus}$, for another example, when the negative terminal PV- of the photovoltaic string is grounded and R2 « R1, |the voltage to ground of PV+| $\approx u_{bus} > 0.5u_{bus}$, and |the voltage to ground of PV-| = 0 < $0.5u_{bus}$.

Therefore, a process of S102 may further include (1) and (2).

In (1), an absolute value of the voltage to ground of either of the terminals at the photovoltaic side of the inverter is compared with a half of a bus voltage of the DC bus.

For example, the absolute value of the voltage to ground of the negative terminal at the photovoltaic side is compared with the half of the bus voltage, that is, |the voltage to ground of PV-| as shown in FIG. 1 or FIG. 2 is compared with $0.5u_{bus}$.

In (2), in response to the absolute value of the voltage to ground of the terminal at the photovoltaic side being greater than the half of the bus voltage, the terminal is determined as the terminal with the greater absolute voltage to ground; otherwise, the other terminal is determined as the terminal with the greater absolute voltage to ground.

For example, in response to |the voltage to ground of PV-| > $0.5u_{bus}$, the negative terminal at the photovoltaic side is determined as the terminal with the greater absolute voltage to ground; otherwise, that is, |the voltage to ground of PV-| < $0.5u_{bus}$, the positive terminal at the photovoltaic side is determined as the terminal with the greater absolute voltage to ground.

In practical applications, for convenience in voltage acquisition and calculation, it is preferable to implement S102 as described above, that is, to compare |the voltage to ground of PV-| as shown in FIG. 1 or FIG. 2 with $0.5u_{bus}$. Nevertheless, implementing S102 by comparing |the voltage to ground of PV+| as shown in FIG. 1 or FIG. 2 with $0.5u_{bus}$ is also possible. What is disclosed herein serves as an example and falls within the protection scope of the present disclosure.

In S103, an equivalent impedance to ground of a corresponding terminal, having a same polarity as the determined terminal, of the DC bus in the inverter is reduced.

In practical applications, S103 may further include: connecting a grounding resistor with the corresponding terminal of the DC bus.

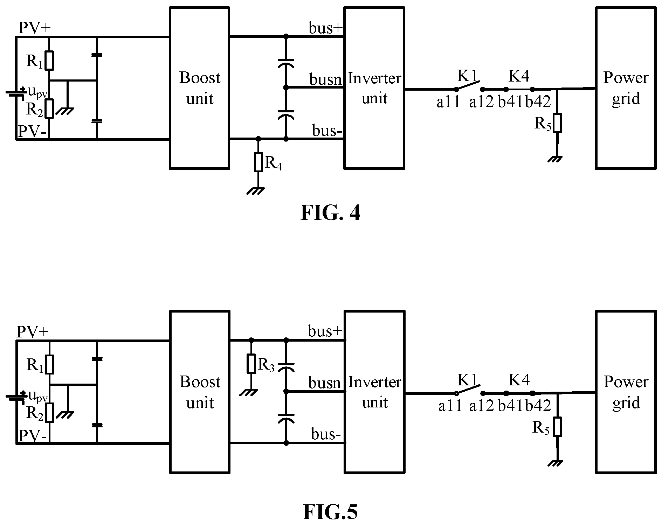

One phase at an AC side of an inverter is taken as an example for illustration, and it is assumed that the relay which is closed later is K1. Unlike FIG. 2, in an embodiment, a grounding resistor, such as $R_4$ shown in FIG. 4 or $R_3$ shown in FIG. 5, is connected to one terminal of the DC bus when a ground fault occurs at the photovoltaic side of the inverter, to reduce the significant voltage difference across the main contact of the relay K1.

Referring to FIG. 4, assuming the positive terminal PV+ at the photovoltaic side is grounded, $R_1 \ll R_2$, and a grounding resistor $R_4$ is connected to the negative terminal bus- of the DC bus. In this case, a common-mode voltage difference $\triangle V_R$ between a11 and a12 of the main contact of the relay K1 is recalculated as:

$$\triangle V_R \approx u_{pv} \times \frac{R_{24}}{R_1 + R_{24}} - 0.5u_{bus}$$

where $R_{24}$ represents an equivalent impedance to ground of the negative terminal of the DC bus when other resistors such as a sampling resistor are neglected. Since $R_{24} = \dfrac{R_2 R_4}{R_2 + R_4} < R_2$, given that $R_1 \ll R_2$ in this case, compared to $\dfrac{R_2}{R_1 + R_2}$ in $\triangle V$ from FIG. 2, $\dfrac{R_{24}}{R_1 + R_{24}}$ in $\triangle V_R$ from FIG. 4 approaches 0.5 more closely, therefore $\triangle V_R < \triangle V$.

It can be seen that, the voltage difference across the main contact of the relay K1 is reduced, and then the inrush current when closing the relay K1 may be reduced, thereby reducing the probability of the erosion on the main contact of the relay K1.

In practical applications, the voltage difference $\triangle V_R$ between a11 and a12 of the main contact of the relay K1 may be precisely regulated by properly selecting a resistance of the resistor $R_4$, effectively reducing the voltage difference $\triangle V_R$ to more efficiently suppress the inrush current when closing the relay K1. In an embodiment, by selecting the resistance of the resistor $R_4$, the equivalent impedances to ground of the positive terminal and the negative terminal of the DC bus may be made to approximate each other, for example, a difference between the two equivalent impedances to ground may be less than a predetermined threshold. In an embodiment, $R_{24} = R_1$ may be configured, resulting in $\triangle V_R \approx 0$. The above descriptions apply to other scenarios regarding two phases at the AC side of the inverter and are not repeated herein.

Referring to FIG. 5, assuming that the negative terminal PV- at the photovoltaic side is grounded, where $R_2 \ll R_1$, a grounding resistor $R_3$ is connected to the positive terminal bus+ of the DC bus. In this case, a voltage difference $\triangle V_R$ between a11 and a12 of the main contact of the relay K1 is recalculated as:

$$\triangle V_R \approx u_{pv} \times \frac{R_2}{R_{13} + R_2} - 0.5u_{bus}$$

where $R_{13}$ represents an equivalent impedance to ground of the positive terminal of the DC bus when other resistors such as a sampling resistor are neglected. Since $R_{13} = \dfrac{R_1 R_3}{R_1 + R_3} < R_1$, given that $R_2 \ll R_1$ in this case, compared to $\dfrac{R_2}{R_1 + R_2}$ in $\triangle V$ from FIG. 2, $\dfrac{R_2}{R_{13} + R_2}$ in $\triangle V_R$ from FIG. 5 approaches 0.5 more closely, therefore $\triangle V_R < \triangle V$.

It can be seen that, the voltage difference across the main contact of the relay K1 is reduced, and then the inrush current when closing the relay K1 may be reduced, thereby reducing the probability of the erosion on the main contact of the relay K1.

In practical applications, the voltage difference $\triangle V_R$ between a11 and a12 of the main contact of the relay K1 may be precisely regulated by properly selecting a resistance of the resistor $R_3$, effectively reducing the voltage difference $\triangle V_R$ to suppress the inrush current when closing the relay K1 more efficiently. In an embodiment, by selecting the resistance of the resistor $R_3$, the equivalent impedances to ground of the positive terminal and the negative terminal of the DC bus may be made to approximate each other, for example, a difference between the two equivalent impedances to ground may be less than a predetermined threshold. In an embodiment, $R_{13} = R_2$ may be configured, resulting in $\triangle V_R \approx 0$. The above descriptions apply to other scenarios regarding two phases at the AC side of the inverter and are not repeated herein.

In S104, grid-connection control is performed.

A process of the grid-connection control may include: issuing a startup instruction, and closing sequentially two AC grid-connection relays. Details of the process may be referenced to the conventional technology and are not repeated herein.

According to the grid-connection control method for the inverter provided in the present disclosure, before the grid-connection control, the above principles are follwed to cause the equivalent impedance to ground of the positive terminal of the DC bus to approach the equivalent impedance to ground of the negative terminal of the DC bus, that is, to make a voltage of a midpoint in the DC bus to approach zero, thereby reducing a voltage difference across a contact of an AC grid-connection relay during implementing a grid connection of the inverter, and then the grid-connection control is performed. In this manner, the inrush current is reduced when closing the AC grid-connection relay, thereby reducing the probability of the erosion on the contact of the relay.

Based on the previous embodiment, in an embodiment, some examples for an implementation process of S101 in the grid-connection control method are given. Examples of S101 are as follows.

S101 may include determining whether a deviation between an absolute value of the voltage to ground of either of the terminals at the photovoltaic side of the inverter and a half of a bus voltage of the DC bus is greater than a predetermined deviation. For example, it may be determined whether a deviation between |a voltage to ground of PV-| and $0.5u_{bus}$ or a deviation between |a voltage to ground of PV+| and $0.5u_{bus}$ is greater than the predetermined deviation $U_{dev}$. In response to the deviation being greater than the predetermined deviation Udev, it is determined that the voltage to ground of the positive terminal and the voltage to ground of the negative terminal at the photovoltaic side fail to meet the predetermined balance condition; otherwise, it is determined that the voltage to ground of the positive terminal and the voltage to ground of the negative terminal at the photovoltaic side meet the predetermined balance condition.

Alternatively, S101 may include determining whether a common-mode voltage difference across the grid-connection relay branch via which the inverter is connected to the grid connection point is greater than a predetermined voltage difference. For example, it may be determined whether the above $\Delta V$ is greater than a predetermined voltage difference. In response to the common-mode voltage difference being greater than the predetermined voltage difference $U_{base}$, it is determined that the voltage to ground of the positive terminal and the voltage to ground of the negative terminal at the photovoltaic side fail to meet the predetermined balance condition; otherwise, it is determined that the voltage to ground of the positive terminal and the voltage to ground of the negative terminal at the photovoltaic side meet the predetermined balance condition.

Alternatively, S101 may include determining whether an absolute value difference between the voltage to ground of the positive terminal and the voltage to ground of the negative terminal at the photovoltaic side is greater than a predetermined difference. For example, it may be determined whether a difference between |the voltage to ground of PV+| and |the voltage to ground of PV-| is greater than a predetermined difference. In response to the difference being greater than the predetermined difference, it is determined that the voltage to ground of the positive terminal and the voltage to ground of the negative terminal at the photovoltaic side fail to meet the predetermined balance condition; otherwise, it is determined that the voltage to ground of the positive terminal and the voltage to ground of the negative terminal at the photovoltaic side meet the predetermined balance condition.

In practical applications, implementations are not limited to the above three forms. Any schemes for determining whether the voltage to ground of the positive terminal and the voltage to ground of the negative terminal at the photovoltaic side are balanced may be adopted, depending on the specific application environment, all of which fall within the protection scope of the present disclosure.

In addition, after S101, the grid-connection control method further includes: in response to the voltage to ground of the positive terminal and the voltage to ground of the negative terminal at the photovoltaic side meeting the predetermined balance condition, the common-mode voltage difference across the grid-connection relay branch is not to be regulated and S104 may be performed directly.

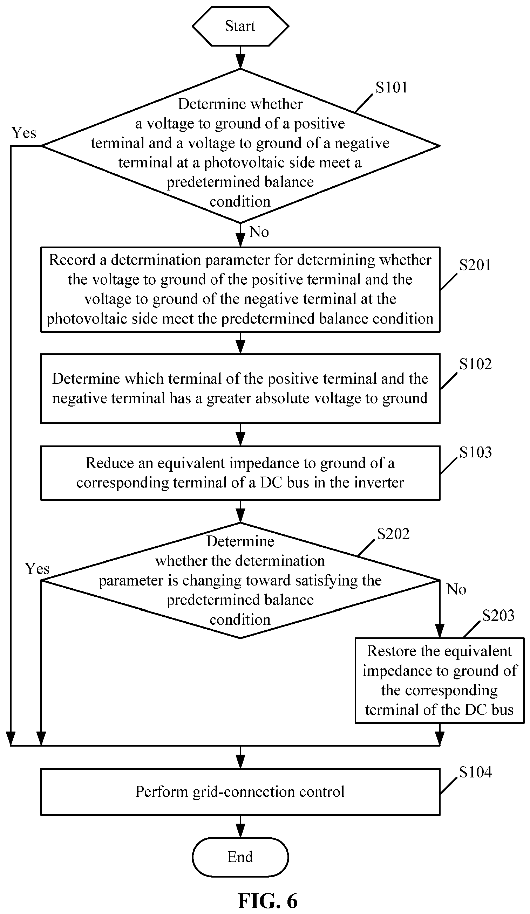

Based on the above embodiments, furthermore, as shown in FIG. 6, after S101, in response to the voltage to ground of the positive terminal and the voltage to ground of the negative terminal at the photovoltaic side failing to meet the predetermined balance condition, the grid-connection control method further includes the following S201.

In S201, a determination parameter for determining whether the voltage to ground of the positive terminal and the voltage to ground of the negative terminal at the photovoltaic side meet the predetermined balance condition is recorded.

The determination parameter may refer to any one of the following parameters used in S101: the deviation between the absolute value of the voltage to ground of either of the terminals at the photovoltaic side and the half of the bus voltage of the DC bus; the common-mode voltage difference across the grid-connection relay branch; and the difference between the absolute values of the voltage to ground of the positive terminal and the voltage to ground of the negative terminal at the photovoltaic side. The determination parameter may be determined depending on a determination process used in S101 and is not limited herein.

Furthermore, after S103, the grid-connection control method further includes the following S202 and S203.

In S202, it is determined whether the determination parameter is changing toward satisfying the predetermined balance condition.

In response to the evaluation parameter changing toward satisfying the preset balance condition, such as the deviation between the absolute values of the voltage to ground of either of the terminals at the photovoltaic side of the inverter and the half of the bus voltage of the DC bus being reduced, the common-mode voltage difference across the grid-connection relay branch being reduced, or the difference between the absolute values of the voltage to ground of the positive terminal and the voltage to ground of the negative terminal at the photovoltaic side being reduced, S104 is performed; otherwise, S203 is performed first, and then S104 is performed.

In S203, the equivalent impedance to ground of the corresponding terminal of the DC bus is restored.

In an embodiment, S203 may include switching out the resistor connected in S103.

$R_4$ shown in FIG. 4 and $R_3$ shown in FIG. 5 are devices for regulating the voltages to ground of respective terminals at the photovoltaic side. Connection states of $R_4$ and $R_3$ are independent of a grid-connection procedure. It can be known from the above embodiments that connecting a grounding resistor to the respective terminal causes both the voltage to ground of the positive terminal and the voltage to ground of the negative terminal at the photovoltaic side to approach the half of the bus voltage. At this time, the common-mode voltage difference across the grid-connection relay branch is detected. In response to the common-mode voltage difference being reduced, grid connection may be directly performed. However, due to variations in field conditions, the deviation between the absolute values of the voltage to ground of positive or negative terminal at the photovoltaic side and the half of the bus voltage may increase after adjustment. In this case, the connected resistor is required to be switched out first, and then the grid connection should be performed under the condition before the adjustment.

It should be noted that the two AC relays in the grid-connection relay branch may be closed sequentially when performing S104. Alternatively, after S101, in response to the voltage to ground of the positive terminal and the voltage to ground of the negative terminal at the photovoltaic side failing to meet the predetermined balance condition, one AC relay in the grid-connection relay branch is closed first, and then only the other AC relay is closed when performing S104. Implementations depend on the application environments and all fall within the protection scope of the present disclosure.

Two complete examples of the grid-connection control method are provided below.

In solution (1), the voltage to ground of the negative terminal at the photovoltaic side is regulated.

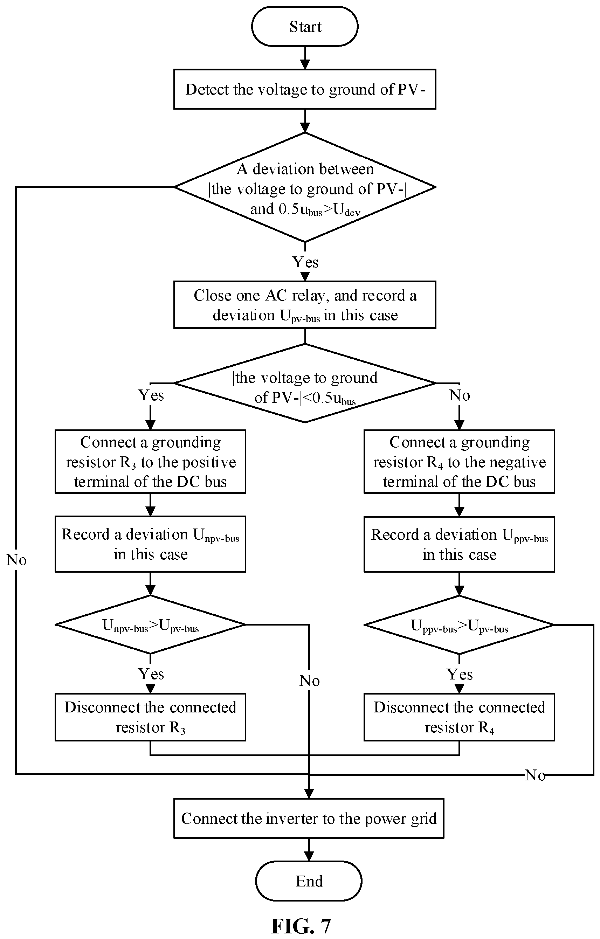

According to the solution, the voltage to ground of the negative terminal at the photovoltaic side is regulated to reduce the common-mode voltage difference across the main contact of the AC relay which is closed last before the grid connection of the inverter. As shown in FIG. 7, a process of controlling start-up of the inverter by using software is as follows.

First, it is detected whether the deviation between the voltage to ground of the negative terminal |the voltage to ground of PV-| at the photovoltaic side and the half $0.5u_{bus}$ of the bus voltage is greater than the predetermined deviation $U_{dev}$.

a. In response to the deviation being not greater than the predetermined deviation $U_{dev}$, a startup instruction is issued and the inverter is connected to the power grid.

b. In response to the deviation being greater than the predetermined deviation $U_{dev}$, one AC relay in the grid-connection relay branch is closed, and a deviation $U_{pv-bus}$ between the voltage to ground of the negative terminal |the voltage to ground of PV-| at the photovoltaic side and the half $0.5u_{bus}$ of the bus voltage in this case is recorded.

After that, in a case that |the voltage to ground of PV-|$<0.5u_{bus}$ is detected, the following is performed.

a. The resistor $R_3$ is connected to one terminal of the DC bus, and a deviation $U_{npv-bus}$ between the voltage to ground of the negative terminal |the voltage to ground of PV-| at the photovoltaic side and the half $0.5u_{bus}$ of the bus voltage is read after a delay of 1 second.

b. In response to $U_{npv-bus}<U_{pv-bus}$, grid-connection control is performed.

c. In response to $U_{npv-bus}>U_{pv-bus}$, the connected resistor $R_3$ is disconnected and then the grid-connection control is performed.

Whereas, in a case that |the voltage to ground of PV-|$>0.5u_{bus}$ is detected, the following is performed.

a. The resistor $R_4$ is connected to one terminal of the DC bus, and a deviation $U_{ppv-bus}$ between the voltage to ground of the negative terminal |the voltage to ground of PV-| at the photovoltaic side and the half $0.5u_{bus}$ of the bus voltage is read immediately after a delay of 1 second.

b. In response to $U_{ppv-bus}<U_{pv-bus}$, the grid-connection control is performed.

c. In response to $U_{ppv-bus}>U_{pv-bus}$, the connected resistor $R_4$ is disconnected and then the grid-connection control is performed.

In solution (2), the common-mode voltage difference is regulated.

The solution (1) only applies to a grid-connection scenario of a single inverter. When multiple inverters are to be connected to the power grid simultaneously, time instants of grid connection may be different. In this scenario, a part of the inverters are connected to the power grid while a part of the inverters are not connected to the power grid yet, and a voltage to ground $u_{grid}$ of a midpoint of the power grid changes and is to be considered. In this case, a voltage $\Delta V'$ across two ends a11 and a12 of the main contact of the relay K1 which is closed later is represented as:

$$\Delta V' = u_a - u_{ac-grid} = u_{pv} \times \frac{R_1}{R_1 + R_2} - 0.5u_{bus} + u_{ac-inverter} - u_{ac-grid} + u_{grid}$$

$$\approx u_{pv} \times \frac{R_2}{R_1 + R_2} - 0.5u_{bus} + u_{grid}$$

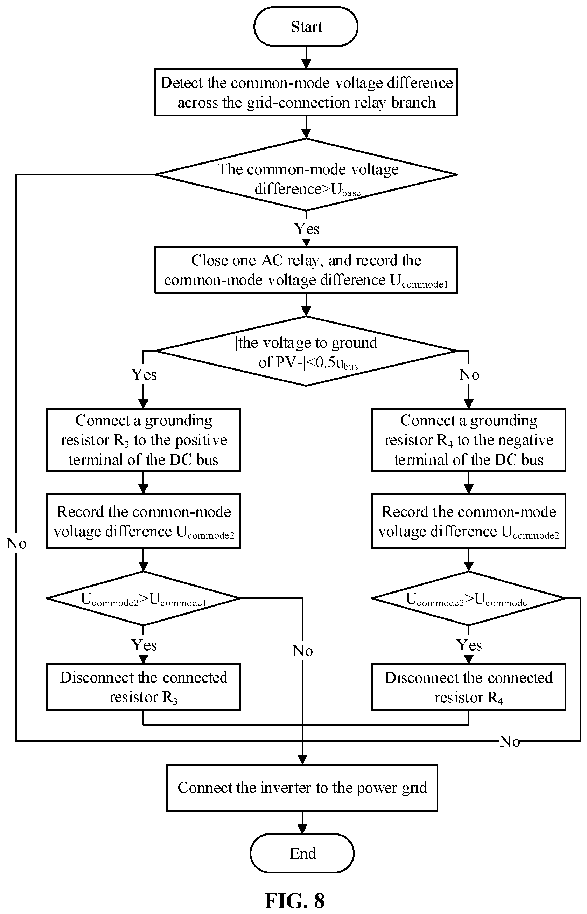

Due to the voltage to ground $u_{grid}$ of a midpoint of the power grid, the original scheme of using the deviation between the voltage to ground of the negative terminal at the photovoltaic side and the half of the bus voltage as the determination parameter may lead to an error, potentially increasing the common-mode voltage difference after adjustment. Therefore, in this solution, the common-mode voltage difference across the grid-connection relay branch before the grid connection of the inverter is directly used as the determination parameter, ensuring more accurate determination. As shown in FIG. 8, a condition of controlling start-up of the inverter by using software is as follows.

First, it is detected whether the common-mode voltage difference across the grid-connection relay branch is greater than the predetermined voltage difference $U_{base}$.

a. In response to the common-mode voltage difference being not greater than the predetermined voltage difference $U_{base}$, a startup instruction is issued and the inverter is connected to the power grid.

b. In response to the common-mode voltage difference being greater than the predetermined voltage difference $U_{base}$, one AC relay in the grid-connection relay branch is closed, and the common-mode voltage difference $U_{commode1}$ across the grid-connection relay branch in this case is recorded.

After that, in a case that |the voltage to ground of PV-|<$0.5u_{bus}$ is detected, the following is performed.

a. The resistor $R_3$ is connected to one terminal of the DC bus, and the common-mode voltage difference $U_{commode2}$ across the grid-connection relay branch in this case is read until acquired data is stable.

b. In response to $U_{commode2}<U_{commode1}$, the grid-connection control is performed.

c. In response to $U_{commode2}>U_{commode1}$, the connected resistor $R_3$ is disconnected and then the grid-connection control is performed.

Whereas, in a case that |the voltage to ground of PV-|>$0.5u_{bus}$ is detected, the following is performed.

a. The resistor $R_4$ is connected to one terminal of the DC bus, and the common-mode voltage difference $U_{commode2}$ across the grid-connection relay branch in this case is read until acquired data is stable.

b. In response to $U_{commode2}<U_{commode1}$, the grid-connection control is performed.

c. In response to $U_{commode2}>U_{commode1}$, the connected resistor $R_4$ is disconnected and then the grid-connection control is performed.

The above two solutions are merely examples and the disclosure is not limited thereto. When implementing the grid-connection control method, appropriate determination parameters may be selected based on the actual application environments, all falling within the protection scope of the present disclosure.

Due to the diversity of on-site grid environments, impedances to ground (such as, $R_1$ and $R_2$ as shown in Fig. 2, Fig. 4, and Fig. 5) are different. In the grid-connection control method, before the grid connection, it is determined whether a grounding resistor is to be connected to the corresponding terminal of the DC bus or no resistor is to be connected to the corresponding terminal of the DC bus by detecting any determination parameter, such as the voltage to ground of the negative terminal at the photovoltaic side. After that, the grid connection is performed. As a result, the grid-connection control method may be capable of adapting complex grid environments.

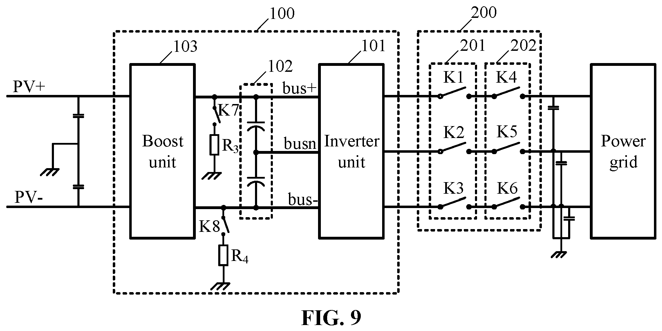

A grid-connected photovoltaic power generation system is further provided according to another embodiment of the present disclosure. As shown in FIG. 9, the grid-connected photovoltaic power generation system includes at least one inverter 100 (taking one as an example for illustration in the drawing) and a grid-connection relay branch 200 for the inverter 100.

A photovoltaic side of the inverter 100 is connected to at least one photovoltaic string, the photovoltaic side is provided with at least one pair of positive terminal and negative terminal, and any of the at least one pair of positive terminal and negative terminal may be connected to at least one photovoltaic string.

As shown in FIG. 9, a main circuit of the inverter 100 includes an inverter unit 101. A DC side of the inverter unit 101 is connected to the photovoltaic side of the inverter 100 via a DC bus. A bus capacitor 102 is connected between a positive terminal and a negative terminal of the DC bus. An AC side of the inverter unit 101 is connected to an AC side of the inverter 100.

In practical applications, the main circuit of the inverter 100 may further include: at least one (taking one as an example for illustration in the drawing) boost unit 103. One end of the boost unit 103 serves as an end of the photovoltaic side of the inverter 100, that is, the pair of positive terminal and negative terminal at the photovoltaic side, and is configured to connect the respective photovoltaic string. The other end of the boost unit 103 is connected to the DC side of the inverter unit 101 via the DC bus.

The inverter 100 is connected to a grid connection point via a respective grid-connection relay branch 200. In addition, the grid-connected photovoltaic power generation system typically includes a transformer, and the transformer is provided between the grid-connection relay branch 200 and the grid connection point. Details may be referenced to the conventional technology and are not repeated herein.

The grid-connection relay branch 200 may include at least two AC relays connected in series, such as the two AC relays 201 and 202 shown in FIG. 9. In FIG. 9, both the AC relays being three-phase relays is taken as an example for illustration. The AC relay 201 includes relays K1 to K3 arranged in respective phase lines. The AC relay 202 includes relays K4 to K6 arranged in respective phase lines. For a single-phase grid-connected photovoltaic power generation system, both the AC relays are single-phase relays, which are not illustrated herein.

For the DC bus in the inverter 100, the positive terminal is grounded via a set of a switch and a resistor connected in series and the negative terminal is grounded via a set of a switch and a resistor connected in series. Referring to FIG. 9, the positive terminal bus+ of the DC bus is grounded via a switch K7 and a resistor $R_3$ connected in series; the negative terminal bus- of the DC bus is grounded via a switch K8 and a resistor $R_4$ connected in series. Within each set, an order in which the switch and the resistor are connected in series is not limited. FIG. 9 exemplarily illustrates that the resistors are connected between the switches and ground, and the order is not limited herein.

A controller within the inverter 100 performs grid-connection control by using any of the grid-connection control methods described in the above embodiments. A specific process and a principle of the grid-connection control method may be referred to the above embodiments, which are not repeated herein. Furthermore, the switch K7 and the switch K8 are controlled by the controller. In an embodiment, when the switch K7 is closed, the resistor $R_3$ is connected; when the switch K7 is opened, the resistor $R_3$ is switched out; when the switch K8 is closed, the resistor $R_4$ is connected; and when the switch K8 is opened, the resistor $R_4$ is switched out. In practical applications, the switches may be a relay or an electronic switch, and the like, which is not limited herein.

Referring to FIG. 9, in a case that the impedance to ground $R_2$ of the negative terminal at the photovoltaic side is significantly greater than the impedance to ground $R_1$ of the positive terminal at the photovoltaic side, a potential to ground of the negative terminal of the DC bus increases rapidly. During the grid connection of the inverter 100, one AC relay in the grid-connection relay branch 200, such as the AC relay 202 at the power grid side including relays K4, K5, and K6 is closed first. In this case, a significant common-mode voltage difference may generate across the main contact of the other AC relay, that is, the AC relay 201 at the inverter side including relays K1, K2, and K3. By closing the switch K8, the voltage difference across the main contact of the AC relay 201 is reduced, thereby mitigating the inrush current generated when closing the relays K1, K2, and K3.

In a case that the impedance to ground $R_2$ of the negative terminal at the photovoltaic side is significantly less than the impedance to ground $R_1$ of the positive terminal at the photovoltaic side, the potential to ground of the negative terminal of the DC bus is reduced rapidly. During the grid connection of the inverter 100, one AC relay in the grid-connection relay branch 200, such as the AC relay 202 at the power grid side including relays K4, K5, and K6 is closed first. In this case, a significant common-mode voltage difference may generate across the main contact of the other AC relay, that is, the AC relay 201 at the inverter side including relays K1, K2, and K3. By closing the switch K7, the voltage difference across the main contact of the AC relay 201 is reduced, thereby mitigating the inrush current generated when closing the relays K1, K2, and K3.

In a case that the impedance to ground $R_2$ of the negative terminal is close to the impedance to ground $R_1$ of the positive terminal at the photovoltaic side, the voltage differences across the main contacts of the relays K1, K2, and K3 in the AC relay 201 are small. The above adjustment is unnecessary, and the inrush current generated when closing the relays K1, K2, and K3 is small, meeting device specifications.

In conventional technologies, when the impedance to ground of the negative terminal or the positive terminal at the photovoltaic side reduces, a significant common-mode voltage difference generates across the main contact of the AC relay which is closed last before the grid connection of the inverter, leading to a significant inrush current at a time instant when closing the AC relay. In an embodiment, a resistor and a switch are connected in series between each of the positive and negative terminals of the DC bus (such as, bus+ and bus- as shown in FIG. 9) and the ground; in this manner, when or before one AC relay (such as, 202) in the grid-connection relay branch 200 is closed, a respective switch is closed to cause the voltage to ground of the negative terminal at the photovoltaic side/of the DC bus to approach a half of a negative bus voltage and the voltage of the midpoint of the DC bus to approach 0. In this way, the voltage difference generated, due to the reduced impedance to ground of the negative terminal or impedance to ground of the positive terminal at the photovoltaic side, across the main contact of the AC relay (such as, 201) which is closed last before the grid connection of the inverter 100 is reduced, thereby reducing probability of the erosion on the main contacts of the relays caused by inrush currents.

It should be noted that the above embodiments exemplarily illustrates that the AC relay 202 in the grid-connection relay branch 200 is closed first, and then the AC relay 201 is closed. In actual applications, a closing order of the two relays is not limited and depends on the specific application environment, all falling within the protection scope of the present disclosure.

It should also be noted that in the grid-connected photovoltaic power generation system, in a case that the number of the inverter 100 is greater than one, when performing the grid-connection control method, the controllers within the inverters 100 determine whether the voltage to ground of the positive terminal and the voltage to ground of the negative terminal at the photovoltaic side of the inverter 100 meet the predetermined balance condition by determining whether the common-mode voltage difference across the respective grid-connection relay branch 200 is greater than the predetermined threshold.

In practical applications, resistance values of the resistor $R_3$ and the resistor $R_4$ are not limited and may range from zero to any resistance value. In an embodiment, the resistance values of $R_3$ and $R_4$ each satisfy a condition that, when the resistor is in a connected state, a difference between equivalent impedances to ground of the two terminals of the DC bus is less than a predetermined threshold. Description of the two resistance values may be referred to the above embodiments and are not repeated herein.

In addition, the above switches and resistors may be PID (Potential Induced Degradation) power supply components within the inverter 100. That is, the PID power supply may be directly utilized to regulate the equivalent impedances of the terminals of the DC bus without modifying hardware circuits or adding additional hardware. Erosion of the contacts caused by the inrush current at a time instant when the AC relay is connected to the power grid is reduced by only controlling logic, detection and determination via software.

Close/open control of switches K7 and K8, which are devices for regulating the voltages to ground at the photovoltaic side, are independent of grid-connection control. After one switch of the switches K7 and K8 is closed to cause the resistor connected to the switch to connect the corresponding terminal of the DC bus, in a case that the deviation between the voltage to ground of the negative terminal at the photovoltaic side/of the DC bus and the half of a negative bus voltage is become greater, the switch is to be opened and the grid connection is performed under the condition before the adjustment.

The same and similar parts among the embodiments in the specification may be referred to each other. Each of the embodiments focuses on its differences from the other embodiments. In particular, the system or system embodiments is basically similar to the method embodiments, and therefore is described relatively briefly. For relevant details, reference can be made to the corresponding description of the method embodiments. The system and system embodiments described above are only schematic, in which the units described as separate components may or may not be physically separated, and the components shown as units may or may not be physical units, that is, the components may be located in one place or distributed at multiple network units. Some or all modules may be selected according to an actual requirement to achieve an object of a solution of an embodiment. Those skilled in the art can understand and implement the solution without any creative effort.

Those skilled in the art may further appreciate that the units and algorithmic steps in the examples described according to the embodiments disclosed herein may be implemented in forms of electronic hardware, computer software or a combination of the both. In order to illustrate the interchangeability of the hardware and the software clearly, the components and the steps in the examples are described generally according to functions in the above description. Whether these functions are performed in hardware or software depends on the specific application and design constraints for the technical solution. Those skilled in the art may implement the described function in various manners for each specific application, however such implementation should not be considered beyond the scope of the present disclosure.

Based on the above description of the disclosed embodiments, the features in different embodiments of the specification may be mutually replaced or combined, so that those skilled in the art can implement or utilize the present disclosure. Various modifications to these embodiments are apparent to those skilled in the art, and the general principles defined herein may be implemented in other embodiments without departing from the spirit or scope of the present disclosure. Therefore, the present disclosure is not to be limited to the embodiments shown herein, but is conformed to the widest scope consistent with the principles and novel features disclosed herein.

**Claims**

1. A grid-connection control method for an inverter, **characterized in that** the inverter is connected to a grid connection point via a grid-connection relay branch, and the grid-connection control method comprises:

   determining whether a voltage to ground of a positive terminal and a voltage to ground of a negative terminal at a photovoltaic side of the inverter meet a predetermined balance condition;
   determining, in response to the voltage to ground of the positive terminal and the voltage to ground of the negative terminal at the photovoltaic side failing to meet the predetermined balance condition, which terminal of the positive terminal and the negative terminal has a greater absolute voltage to ground;
   reducing an equivalent impedance to ground of a corresponding terminal, having a same polarity as the determined terminal, of a direct-current, DC, bus in the inverter; and
   performing grid-connection control.

2. The grid-connection control method for an inverter according to claim 1, **characterized in that** the reducing an equivalent impedance to ground of a corresponding terminal of a DC bus in the inverter comprises:
   connecting a grounding resistor to the corresponding terminal of the DC bus.

3. The grid-connection control method for an inverter according to claim 1, **characterized in that** the determining, in response to the voltage to ground of the positive terminal and the voltage to ground of the negative terminal at the photovoltaic side failing to meet the predetermined balance condition, which terminal of the positive terminal and the negative terminal has a greater absolute voltage to ground comprises:

   comparing an absolute value of the voltage to ground of either of the positive terminal and the negative terminal at the photovoltaic side of the inverter with a half of a bus voltage of the DC bus; and
   determining, in response to the absolute value of the voltage to ground of the terminal at the photovoltaic side of the inverter is greater than the half of the bus voltage, the terminal as the terminal with the greater absolute voltage to ground; and otherwise determining the other terminal as the terminal with the greater absolute voltage to ground.

4. The grid-connection control method for an inverter according to claim 3, **characterized in that** the comparing an absolute value of the voltage to ground of either of the positive terminal and the negative terminal at the photovoltaic side of the inverter with a half of a bus voltage of the DC bus comprises:

   comparing the absolute value of the voltage to ground of the negative terminal at the photovoltaic side of the inverter with the half of the bus voltage; or
   comparing the absolute value of the voltage to ground of the positive terminal at the photovoltaic side of the inverter with the half of the bus voltage.

5. The grid-connection control method for an inverter according to claim 1, **characterized in that** the determining whether a voltage to ground of a positive terminal and a voltage to ground of a negative terminal at a photovoltaic side of the inverter meet a predetermined balance condition comprises:

   determining whether a deviation between an absolute value of the voltage to ground of either of the positive terminal and the negative terminal at the photovoltaic side of the inverter and a half of a bus voltage of the DC bus is greater than a predetermined deviation;
   determining, in response to the deviation being greater than the predetermined deviation, that the voltage to ground of the positive terminal and the voltage to ground of the negative terminal at the photovoltaic side fail to meet the predetermined balance condition; and determining, in response to the deviation being not greater than the predetermined deviation, that the voltage to ground of the positive terminal and the voltage to ground of the negative terminal at the photovoltaic side meet the predetermined balance condition.

6. The grid-connection control method for an inverter according to claim 5, **characterized in that** the determining whether a deviation between an absolute value of the voltage to ground of either of the positive terminal and the negative terminal at the photovoltaic side of the inverter and a half of a bus voltage of the DC bus is greater than a predetermined deviation comprises:

   determining whether a deviation between an absolute value of the voltage to ground of the negative terminal at the photovoltaic side of the inverter and the half of the bus voltage is greater than the predetermined deviation; or determining whether a deviation between an absolute value of the voltage to ground of the positive terminal at the photovoltaic side of the inverter and the half of the bus voltage is greater than the predetermined deviation.

7. The grid-connection control method for an inverter according to claim 1, **characterized in that** the determining whether a voltage to ground of a positive terminal and a voltage to ground of a negative terminal at a photovoltaic side of the inverter meet a predetermined balance condition comprises:

   determining whether a common-mode voltage difference across the grid-connection relay branch via which the inverter is connected to the grid connection point is greater than a predetermined voltage difference; in response to the common-mode voltage difference being greater than the predetermined voltage difference, determining that the voltage to ground of the positive terminal and the voltage to ground of the negative terminal at the photovoltaic side fail to meet the predetermined balance condition; and in response to the common-mode voltage difference being not greater than the predetermined voltage difference, determining that the voltage to ground of the positive terminal and the voltage to ground of the negative terminal at the photovoltaic side meet the predetermined balance condition.

8. The grid-connection control method for an inverter according to claim 1, **characterized in that** the determining whether a voltage to ground of a positive terminal and a voltage to ground of a negative terminal at a photovoltaic side of the inverter meet a predetermined balance condition comprises:

   determining whether an absolute value difference between the voltage to ground of the positive terminal and the voltage to ground of the negative terminal at the photovoltaic side of the inverter is greater than a predetermined difference; in response to the absolute value difference being greater than the predetermined difference, determining that the voltage to ground of the positive terminal and the voltage to ground of the negative terminal at the photovoltaic side fail to meet the predetermined balance condition; and in response to the absolute value difference being not greater than the predetermined difference, determining that the voltage to ground of the positive terminal and the voltage to ground of the negative terminal at the photovoltaic side meet the predetermined balance condition.

9. The grid-connection control method for an inverter according to any one of claims 1 to 8, **characterized in that** after determining whether the voltage to ground of the positive terminal and the voltage to ground of the negative terminal at the photovoltaic side of the inverter meet the predetermined balance condition, in response to the voltage to ground of the positive terminal and the voltage to ground of the negative terminal at the photovoltaic side failing to meet the predetermined balance condition, the grid-connection control method further comprises:

   recording a determination parameter for determining whether the voltage to ground of the positive terminal and the voltage to ground of the negative terminal at the photovoltaic side meet the predetermined balance condition; and wherein after reducing the equivalent impedance to ground of the corresponding terminal of the DC bus in the inverter, the grid-connection control method further comprises:

   determining whether the determination parameter is changing toward satisfying the predetermined balance condition; in response to the evaluation parameter changing toward satisfying the preset balance condition, performing the grid-connection control; and in response to the evaluation parameter not changing toward satisfying the preset balance condition, restoring the equivalent impedance to ground of the corresponding terminal of the DC bus and then performing the grid-connection control.

10. The grid-connection control method for an inverter according to any one of claims 1 to 9, **characterized in that** after determining whether the voltage to ground of the positive terminal and the voltage to ground of the negative terminal at the photovoltaic side of the inverter meet the predetermined balance condition, the grid-connection control method further comprises:
in response to the voltage to ground of the positive terminal and the voltage to ground of the negative terminal at the photovoltaic side meeting the predetermined balance condition, performing the grid-connection control.

11. A grid-connected photovoltaic power generation system, **characterized by** comprising:
at least one inverter and a grid-connection relay branch for the inverter; wherein,

a photovoltaic side of the inverter is connected to at least one photovoltaic string;
the inverter is connected to a grid connection point via the grid-connection relay branch; a positive terminal and a negative terminal of a DC bus in the inverter are each grounded via a set of a switch and a resistor connected in series;
a controller in the inverter performs grid-connection control by using the grid-connection control method for the inverter according to any one of claims 1 to 10; and
the switches are controlled by the controller.

12. The grid-connected photovoltaic power generation system according to claim 11, **characterized in that** resistances of the resistors are configured to satisfy a condition that a difference between equivalent impedances to ground of the two terminals of the DC bus, when the resistors are in a connected state, is less than a predetermined threshold.

13. The grid-connected photovoltaic power generation system according to claim 11, **characterized in that** in a case that the number of the inverter is greater than one, the controllers are each configured to determine, when performing the grid-connection control method, whether a voltage to ground of the positive terminal and a voltage to ground of the negative terminal at the photovoltaic side of the respective inverter meet the predetermined balance condition by determining whether a common-mode voltage difference across the respective grid-connection relay branch is greater than a predetermined threshold.

14. The grid-connected photovoltaic power generation system according to claim 11, **characterized in that** the switches and the resistors are potential-induced degradation, PID, power supply components within the inverter.

15. The grid-connected photovoltaic power generation system according to claim 11, **characterized in that** the grid-connection relay branch comprises: at least two alternating current, AC, relays connected in series.

16. The grid-connected photovoltaic power generation system according to any one of claims 11 to 15, **characterized in that** a main circuit of the inverter comprises an inverter unit;

a DC side of the inverter unit is connected to the photovoltaic side of the inverter via the DC bus;
a bus capacitor is connected between the positive terminal and the negative terminal of the DC bus; and
an AC side of the inverter unit is connected to an AC side of the inverter.

17. The grid-connected photovoltaic power generation system according to claim 16, **characterized in that** the main circuit of the inverter further comprises: at least one boost unit;

one end of the boost unit serves as an end corresponding to the photovoltaic side of the inverter and is configured to connect a respective photovoltaic string; and
the other end of the boost unit is connected to the DC side of the inverter unit via the DC bus.

**FIG. 1**

**FIG.2**

Start

Determine whether a voltage to ground of a positive terminal and a voltage to ground of a negative terminal at a photovoltaic side meet a predetermined balance condition

S101

Yes

No

Determine which terminal of the positive terminal and the negative terminal has a greater absolute voltage to ground

S102

Reduce equivalent impedance to ground of a corresponding terminal of a DC bus in the inverter

S103

Perform grid-connection control

S104

End

**FIG. 3**

**FIG. 4**

**FIG.5**

Start

Determine whether
a voltage to ground of a positive
terminal and a voltage to ground of a negative
terminal at a photovoltaic side meet a
predetermined balance
condition

S101

Yes

No

Record a determination parameter for determining whether
the voltage to ground of the positive terminal and the
voltage to ground of the negative terminal at the
photovoltaic side meet the predetermined balance condition

S201

Determine which terminal of the positive terminal and the
negative terminal has a greater absolute voltage to ground

S102

Reduce an equivalent impedance to ground of a
corresponding terminal of a DC bus in the inverter

S103

Determine
whether the determination
parameter is changing toward satisfying the
predetermined balance
condition

S202

Yes

No

Restore the equivalent
impedance to ground of
the corresponding
terminal of the DC bus

S203

Perform grid-connection control

S104

End

**FIG. 6**

```
                        ┌──────────┐
                        │   Start  │
                        └────┬─────┘
                             │
                             ▼
              ┌──────────────────────────────┐
              │ Detect the voltage to ground of PV- │
              └──────────────┬───────────────┘
                             │
                             ▼
                      ╱──────────────╲
                    ╱  A deviation between ╲
                   ╱  |the voltage to ground of PV-|  ╲
                   ╲    and 0.5u_bus>U_dev          ╱
                    ╲──────────────────╱
                             │ Yes
                             ▼
              ┌──────────────────────────────┐
              │ Close one AC relay, and record a │
              │ deviation U_pv-bus in this case  │
              └──────────────┬───────────────┘
                             │
                             ▼
                      ╱──────────────╲
          Yes        ╱ |the voltage to ground ╲       No
        ┌───────────╱   of PV-|<0.5u_bus        ╲───────────┐
        │           ╲──────────────────╱                    │
        ▼                                                    ▼
┌──────────────────┐                          ┌──────────────────┐
│ Connect a grounding │                        │ Connect a grounding │
│ resistor R3 to the positive │                │ resistor R4 to the negative │
│ terminal of the DC bus │                     │ terminal of the DC bus │
└────────┬─────────┘                          └────────┬─────────┘
         │                                             │
         ▼                                             ▼
┌──────────────────┐                          ┌──────────────────┐
│ Record a deviation U_npv-bus │                │ Record a deviation U_ppv-bus │
│      in this case │                          │      in this case │
└────────┬─────────┘                          └────────┬─────────┘
         │                                             │
         ▼                                             ▼
    ╱──────────╲                                  ╱──────────╲
   ╱ U_npv-bus> ╲   No                           ╱ U_ppv-bus> ╲   No
   ╲ U_pv-bus   ╱──────┐                         ╲ U_pv-bus   ╱──────┐
    ╲──────────╱       │                          ╲──────────╱       │
      │ Yes            │                            │ Yes            │
      ▼                │                            ▼                │
┌──────────────┐      │                    ┌──────────────┐         │
│ Disconnect the connected │                │ Disconnect the connected │
│ resistor R3  │           │                │ resistor R4  │         │
└──────┬───────┘           │                └──────┬───────┘         │
       │                   │                       │                 │
       └───────────────────┘                       └─────────────────┘
                    │                                        │ No
                    ▼                                        │
        ┌──────────────────────────────┐◄───────────────────┘
        │ Connect the inverter to the power grid │
        └──────────────┬───────────────┘
                       │
                       ▼
                  ┌─────────┐
                  │   End   │
                  └─────────┘
```

**FIG. 7**

FIG. 8

**FIG. 9**

## INTERNATIONAL SEARCH REPORT

| International application No. |
| --- |
| **PCT/CN2023/125103** |

| A. | CLASSIFICATION OF SUBJECT MATTER |
| --- | --- |
| | H02J3/38(2006.01)i |

According to International Patent Classification (IPC) or to both national classification and IPC

| B. | FIELDS SEARCHED |
| --- | --- |

Minimum documentation searched (classification system followed by classification symbols)

IPC:H02J，H02S，G01R，H02M

Documentation searched other than minimum documentation to the extent that such documents are included in the fields searched

Electronic data base consulted during the international search (name of data base and, where practicable, search terms used)

CNTXT, ENTXTC, WPABSC, CNKI: 光伏, 并网, 逆变器, 母线, 正, 负, 电压差, 接地, 电阻, 阻抗, 浪涌, grid, connecti+, inverter, DC, AC, bus, positive, negative, electrode, voltage difference, ground, impact current

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117081157 A (SUNGROW POWER SUPPLY CO., LTD.) 17 November 2023 (2023-11-17) description, paragraphs [0068]-[0172], and figures 1-9 | 1-17 |
| Y | CN 115714428 A (GOODWAY TECHNOLOGY CO., LTD.) 24 February 2023 (2023-02-24) description, paragraphs [0040]-[0087], and figure 1-4 | 1-17 |
| Y | CN 113193597 A (SUNGROW POWER SUPPLY CO., LTD.) 30 July 2021 (2021-07-30) description, paragraphs [0036]-[0153], and figures 1-11 | 1-17 |
| A | CN 113328463 A (SUNGROW POWER SUPPLY CO., LTD.) 31 August 2021 (2021-08-31) entire document | 1-17 |
| A | CN 113872241 A (GOODWAY TECHNOLOGY CO., LTD.) 31 December 2021 (2021-12-31) entire document | 1-17 |
| A | CN 209982435 U (SUNGROW POWER SUPPLY CO., LTD.) 21 January 2020 (2020-01-21) entire document | 1-17 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 December 2023** | **14 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/125103** |

### C. DOCUMENTS CONSIDERED TO BE RELEVANT

| Category* | Citation of document, with indication, where appropriate, of the relevant passages | Relevant to claim No. |
| --- | --- | --- |
| A | CN 113315373 A (SINENG ELECTRIC CO., LTD.) 27 August 2021 (2021-08-27) entire document | 1-17 |
| A | CN 106997008 A (SUNGROW POWER SUPPLY CO., LTD.) 01 August 2017 (2017-08-01) entire document | 1-17 |
| A | CH 701165 B1 (SCHEKULIN DIRK) 15 December 2010 (2010-12-15) entire document | 1-17 |

Form PCT/ISA/210 (second sheet) (July 2022)

**INTERNATIONAL SEARCH REPORT**
Information on patent family members

International application No.

**PCT/CN2023/125103**

| Patent document cited in search report | | | Publication date (day/month/year) | Patent family member(s) | Publication date (day/month/year) |
|---|---|---|---|---|---|
| CN | 117081157 | A | 17 November 2023 | None | |
| CN | 115714428 | A | 24 February 2023 | None | |
| CN | 113193597 | A | 30 July 2021 | None | |
| CN | 113328463 | A | 31 August 2021 | None | |
| CN | 113872241 | A | 31 December 2021 | None | |
| CN | 209982435 | U | 21 January 2020 | None | |
| CN | 113315373 | A | 27 August 2021 | None | |
| CN | 106997008 | A | 01 August 2017 | None | |
| CH | 701165 | B1 | 15 December 2010 | None | |

Form PCT/ISA/210 (patent family annex) (July 2022)

**EP 4 779 834 A1**

**Patent documents cited in the description**

- CN 202311189448